# EUROPÄISCHE PATENTANMELDUNG

(11) **EP 4 600 158 A1**
(43) Veröffentlichungstag der Anmeldung: **13.08.2025**
(21) Anmeldenummer: 24198486.3
(22) Anmeldetag: 04.09.2024
(51) Int. Cl.: B64G 1/00, B64G 1/62

(54) **WIEDERVERWENDBARES NUTZLASTMODUL, OBERSTUFE UND WELTRAUMRAKETE**

(30) Priorität: 09.02.2024 DE 102024103762
(71) Anmelder: Deutsches Zentrum für Luft- und Raumfahrt e.V., 53227 Bonn (DE)
(72) Erfinder: Saile, Dominik, 51147 Köln (DE); Riehmer, Johannes, 51147 Köln (DE)
(74) Vertreter: Schlimme, Wolfram

(57) **Zusammenfassung**

Ein Wiederverwendbares Nutzlastmodul (2; 2') als Teil einer Oberstufe (12) einer Weltraumrakete (1) ist versehen mit einer im geschlossenen Zustand des Nutzlastmoduls (2) einen Nutzlast-Aufnahmeraum (21) umgebenden und eine äußere Hülle (20; 20') eines Rumpfs (29) des Nutzlastmoduls (2; 2') bildenden Verkleidung (20A), die drehsymmetrisch zu einer Nutzlastmodul-Längsachse (X_{N}) ausgebildet ist, welche koaxial mit oder parallel zu einer Längsachse (X_{R}) der Weltraumrakete (1) verläuft, und zeichnet sich dadurch aus, dass die äußere Hülle (20; 20') bildende Verkleidung (20A) zumindest zwei Flächenabschnitte (23, 24) aufweist, die um jeweils eine Schwenkachse (X₂₃, X₂₄) nach außen schwenkbar sind.

## Beschreibung

Die Erfindung betrifft ein wiederverwendbares Nutzlastmodul als Teil einer Oberstufe einer Weltraumrakete gemäß dem Oberbegriff des Patentanspruchs 1. Sie betrifft weiterhin eine Oberstufe und eine Weltraumrakete mit einem derartigen Nutzlastmodul.

Lange Zeit waren Weltraumtransporter vorwiegend von so genannten "Expendable Launch Vehicles", beispielsweise Raketen, gebildet, die einmalig zur Erfüllung einer Mission genutzt wurden und anschließend nicht wiederverwendet werden konnten. Alle Teile eines solchen Trägersystems wurden während des Aufstiegs in den Weltraum voneinander separiert und fielen zurück auf die Erde wobei sie verglühten oder beim Einschlag auf der Erde zerstört wurden.

Für den Rücktransport von Nutzlast oder Astronauten aus dem Weltraum zurück zur Erde werden hingegen zumeist Kapseln verwendet. Diese sind üblicherweise rotationssymmetrisch, da sie sich so einfach in klassische zylindrische Raketenkonfigurationen integrieren lassen und dadurch beim Aufstieg der Rakete keine Seitenlasten auf die Rakete induzieren. Ein Nachteil ist dabei allerdings, dass die Größe und das Volumen dieser Kapseln durch den Raketendurchmesser begrenzt ist und der Wiedereintritt in die Erdatmosphäre und auch beim darauffolgenden Rücksturz zur Erde nur eingeschränkt steuerbar ist. Zudem landen diese Kapseln meist mit Fallschirmen im Meer oder auf dem Land und unterliegen dabei harten Aufprall-Stößen, was problematisch für eine eventuelle Wiederverwendbarkeit der Kapsel ist und diese in der Regel ausschließt.

Eine Alternative zu Kapseln als Transportmittel sind geflügelte Weltraumtransporter, die bei einem Flug in einer atmosphärischen Umgebung Auftriebseigenschaften aufweisen und die prinzipiell länger, also auch größer, gebaut werden können, wodurch mehr Volumen für Nutzlasten und/oder Passagiere zur Verfügung steht. Zusätzlich sind derartige Weltraumtransporter in einem größeren Flugbereich steuerbar als Kapseln.

Nachteile derartiger geflügelter Weltraumtransporter-Konzepte ergeben sich unter anderem aus der asymmetrischen Form des Weltraumtransporters. Die asymmetrische Form erzeugt beim Start und beim Aufstieg in den Weltraum mittels einer Trägerrakete in der Atmosphäre Seitenlasten auf die Trägerrakete für welche diese üblicherweise nicht ausgelegt ist, insbesondere auch dann, wenn Seitenwinde entlang der Trajektorie, also der Bewegungsbahn der Trägerrakete, vorherrschen. Um das aerodynamisch bedingte Auftreten solcher Seitenlasten zu verhindern, wird ein solcher Weltraumtransporter häufig während des Aufstiegs durch Nutzlastverkleidungen verdeckt oder der Weltraumtransporter wird speziell an die Trägerrakete angepasst, wodurch das Nutzlastmodul nur entsprechend klein gebaut werden kann. Ein weiter Nachteil ist, dass die Geometrien der geflügelten Konfiguration komplexer sind als bei Kapseln und damit die Form eines für den Wiedereintritt in die Erdatmosphäre vorgesehenen Hitzeschutzschilds deutlich komplexer und teurer ausfällt.

Aufgabe der vorliegenden Erfindung ist es, ein verbessertes wiederverwendbares Nutzlastmodul anzugeben, das ohne nachteilige Auswirkungen auf die Aufstiegsphase in den Weltraum eine verbesserte Steuerbarkeit beim Wiedereintritt durch die Erdatmosphäre aufweist, sowie eine entsprechende Oberstufe einer Weltraumrakete anzugeben.

Der auf die Nutzlast gerichtete Teil der Aufgabe wird gelöst mit den Merkmalen des Patentanspruchs 1.

Ein wiederverwendbares Nutzlastmodul als Teil einer Oberstufe einer Weltraumrakete ist versehen mit einer im geschlossenen Zustand des Nutzlastmoduls einen Nutzlast-Aufnahmeraum umgebenden und eine äußere Hülle eines Rumpfs des Nutzlastmoduls bildenden Verkleidung, die drehsymmetrisch zu einer Nutzlastmodul-Längsachse ausgebildet ist, welche koaxial mit oder parallel zu einer Längsachse der Weltraumrakete verläuft. Ein solches Nutzlastmodul zeichnet sich erfindungsgemäß dadurch aus, dass die die äußere Hülle bildende Verkleidung zumindest zwei Flächenabschnitte aufweist, die um jeweils eine Schwenkachse nach außen schwenkbar sind,

Durch die drehsymmetrische Ausgestaltung des Nutzlastmoduls entstehen während des Aufstiegs der das Nutzlastmodul tragenden Weltraumrakete, also im eingeklappten Zustand der nach außen schwenkbaren Flächenabschnitte, keine oder nur geringe auf die Rakete einwirkenden Seitenlasten. Weiterhin lässt sich eine derartiges Nutzlastmodul ohne größere Anpassungsarbeiten an klassische, zylindrische Raumtransporter adaptieren und in diese integrieren.

Durch die Erfindung wird zudem die Reichweite des Nutzlastmoduls nach dem Wiedereintritt verbessert und dadurch die Möglichkeit einer erweiterten oder gar dezidierten Landeplatzauswahl geschaffen. Das eine Oberstufe bildende Nutzlastmodul kann zumindest eine eigene Antriebsvorrichtung aufweisen. Diese ermöglicht es, dem Nutzlastmodul - neben Steuerimpulsen durch kleinere Steuerungstriebwerke - mittels der eigenständigen Antriebsvorrichtung auch einen Vortrieb zu verleihen.

Weitere bevorzugte und vorteilhafte Ausgestaltungsmerkmale des erfindungsgemäßen Nutzlastmoduls sind Gegenstand der Unteransprüche 2 bis 8.

Vorzugsweise ist die jeweilige Schwenkachse oder ein dominanter Richtungsvektor der jeweiligen Schwenkachse in Richtung der Nutzlastmodul-Längsachse oder parallel dazu ausgerichtet. Die jeweilige Schwenkachse kann aber auch zur Nutzlastmodul-Längsachse geneigt verlaufen.

Weiter vorteilhaft ist es, wenn die verschwenkbaren Flächenabschnitte und bevorzugt auch deren Schwenkachsen zueinander spiegelsymmetrisch angeordnet sind.

Bei einer bevorzugten Ausführungsform der Erfindung bilden die nach außen schwenkbaren Flächenabschnitte in einem nicht ausgeschwenkten Zustand Teile der Verkleidung oder sie liegen an dieser an, wobei sie vorzugsweise die drehsymmetrische Außenkontur der Verkleidung mitbestimmen und wobei sich die nach außen schwenkbaren Flächenabschnitte in einem ausgeschwenkten Zustand seitlich vom Rumpf weg erstrecken und jeweils einen Flügel und/oder eine Steuerfläche des Nutzlastmoduls bilden. Für die Rückkehr eines solchen Nutzlastmoduls können deren von den nach außen schwenkbaren Flächenabschnitten gebildeten Seitenverkleidungsteile aufgeklappt werden womit sich das Nutzlastmodul in einen auftriebserzeugenden Raumgleiter verwandelt, der mittels entsprechender Steuerung an den Zielort zurückfliegen kann. Die Flügel können dabei als Tragflächen und/oder Steuerflächen genutzt werden.

Dabei ist es von Vorteil, wenn der jeweilige Flügel im ausgeschwenkten Zustand mit dem benachbarten Abschnitt des Rumpfs eine V-förmige, vorzugsweise spiegelsymmetrische, Stellung einnimmt, wobei die spitze Kante des V parallel zur Nutzlastmodul-Längsachse verläuft oder zumindest eine dominante Richtungskomponente aufweist, die parallel zur Nutzlastmodul-Längsachse ausgerichtet ist und bevorzugt eine spiegelsymmetrische Konfiguration bildet. Diese Ausgestaltung vereint im zusammengeklappten Zustand der Flügel eine drehsymmetrische Gestalt des Nutzlastmoduls, vorzugsweise mit einer spiegelsymmetrischen Konfiguration, mit wirksamen Auftriebseigenschaften im ausgeklappten Zustand der Flügel.

Vorteilhaft ist auch eine Ausgestaltung der Erfindung, die mit anderen Ausführungsformen kombinierbar ist und bei der die jeweilige Tragfläche, insbesondere eines jeweiligen Flügelpaars, zumindest bereichsweise als aerodynamische Tragfläche mit Auftriebseigenschaften oder als aerodynamische Steuerfläche ausgebildet ist. Derartige in Form von aerodynamischen Auftriebsprofilen ausgestaltete herausschwenkbare Flügeln verbessern deutlich die Flugeigenschaften des Nutzlastmoduls in der Atmosphäre.bei der Rückkehr zur Erde

Auch von Vorteil ist eine mit anderen Ausführungsformen kombinierbare Variante des erfindungsgemäßen Nutzlastmoduls, bei der die äußere Hülle eine innere Hülle des Nutzlastmoduls umgibt und wobei innerhalb der nach außen schwenkbaren Flächenabschnitte der äußeren Hülle nach außen schwenkbare Klappen der inneren Hülle vorgesehen sind, die im geöffneten Zustand einen Zugang zum Nutzlast-Aufnahmeraum freigeben. Dadurch wird auch in der Wiedereintritts- und Rückkehrphase gewährleistet, dass der Nutzlastraum unabhängig von der Stellung der nach außen schwenkbaren Flächenabschnitte, also beispielsweise der Flügel, geschlossen bleibt.

Besonders vorteilhaft ist es auch, wenn die die äußere Hülle bildende Verkleidung einen polygonalen, insbesondere fünfeckigen, Querschnitt aufweist. Auch andere polygonale Querschnitte mit einer geraden oder ungeraden Anzahl von Ecken, aber auch ein runder Querschnitt sind von der Erfindung mit umfasst. Dadurch lassen sich die Eigenschaften der Seitenkraftfreiheit in der Aufstiegsphase und der Auftriebsentwicklung beim Wiedereintritt in die Atmosphäre und beim Rücksturz zur Erde optimal kombinieren. Die Ecken des jeweiligen Polygons sind bevorzugt abgerundet, so dass dort keine ausgeprägten Kanten vorhanden sind. Außerdem kann das betreffende Polygon auch verzerrt sein, zum Beispiel abgeplattet, gesteckt oder gestaucht; wobei die Kanten des Polygons unterschiedlich lang sein können.

Der auf die Oberstufe einer Weltraumrakete gerichtete Teil der Aufgabe wird gelöst mit den Merkmalen des Anspruchs 9.

Eine solche Oberstufe weist neben einer Oberstufen-Antriebssektion mit zumindest einem Oberstufenantrieb ein erfindungsgemäßes wiederverwendbares Nutzlastmodul auf.

Der auf die Weltraumrakete gerichtete Teil der Aufgabe wird gelöst mit den Merkmalen des Anspruchs 10.

Eine solche Weltraumrakete ist versehen mit einer unteren Antriebsstufe sowie mit zumindest einer einen Raketenrumpf bildenden weiteren Raketenstufe und zeichnet sich dadurch aus, dass in einem von der Antriebsstufe abgewandten vorderen Bereich einer Oberstufe der Weltraumrakete ein erfindungsgemäßes wiederverwendbares Nutzlastmodul als Teil einer Raketenoberstufe vorgesehenen ist. Diese Weltraumrakete weist die vorstehend bereits beschriebenen Vorteile beim Start und beim Aufstieg in den Weltraum auf und ist wegen der nicht erforderlichen Verkleidung des Nutzlastmoduls gewichtsreduziert.

Vorzugsweise bildet das Nutzlastmodul dabei einen vorderen Teil der Oberstufe.

Der Kern der Erfindung ist somit eine drehsymmetrische Ausgestaltung der von einem Nutzlastmodul gebildeten Raketenoberstufe, die mittels klappbaren Verkleidungsteilen in einen geflügelte Rückkehrgleiter umgewandelt werden kann. Vorzugsweise gleicht die Außenkontur des Nutzlastmoduls im Querschnitt nicht wie üblich einem Kreis, sondern einem Polygon. Dadurch entstehen einerseits während des Aufstiegs im eingeklappten Zustand der nach außen schwenkbaren Flächenabschnitte keine beim Aufstieg auf die Rakete einwirkenden Seitenlasten. Andererseits können die nach außen schwenkbaren Flächenabschnitte für die Rückkehr aufgeklappt werden, wodurch sich das Nutzlastmodul in einen auftriebserzeugenden Raumgleiter verwandelt, der mittels entsprechender Steuerung an den Zielort zurückfliegen kann. Weiterhin führt das Aufklappen zu einer Querschnittsflächenerhöhung, welche die Wärmelasten und Drucklasten während des Wiedereintritts im Vergleich zu einer Kapsel deutlich reduziert.

Ein wesentlicher Vorteil der Erfindung besteht darin, dass durch die Erfindung eine Form eines Nutzlastmoduls und mithin auch einer Weltraumrakete definiert wird, die die optimale Form für die unterschiedlichen Missions- und Flugphasen einnehmen kann und damit die Vorteile der beiden vorherrschenden Konfigurationen - Kapseln einerseits und geflügelte Fahrzeuge andererseits - in sich vereint und deren jeweilige Nachteile minimiert. Zudem kann durch die sich wiederholende, drehsymmetrische Geometrie ein für den Wiedereintritt erforderliches Hitzeschutzschild aus sich wiederholenden Elementen aufgebaut sein, was die Komplexität und damit auch die Kosten reduziert.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: in schematischer Darstellung eine Weltraumrakete mit einer von einem Nutzlastmodul gebildeten Oberstufe;
- Fig. 2: eine perspektivische Ansicht einer ersten Variante eines Nutzlastmoduls in einer Startkonfiguration;
- Fig. 3: eine Frontansicht des Nutzlastmoduls aus Fig. 2;
- Fig. 4: eine perspektivische Ansicht des Nutzlastmoduls aus Fig. 2 in einer Wiedereintrittskonfiguration;
- Fig. 5: eine Frontansicht des Nutzlastmoduls aus Fig. 4;
- Fig. 6: eine perspektivische Ansicht des Nutzlastmoduls aus Fig. 2 in einer Be-/Entladungskonfiguration und
- Fig. 7: eine Frontansicht des Nutzlastmoduls aus Fig. 6.

### DARSTELLUNG VON BEVORZUGTEN AUSFÜHRUNGSBEISPIELEN

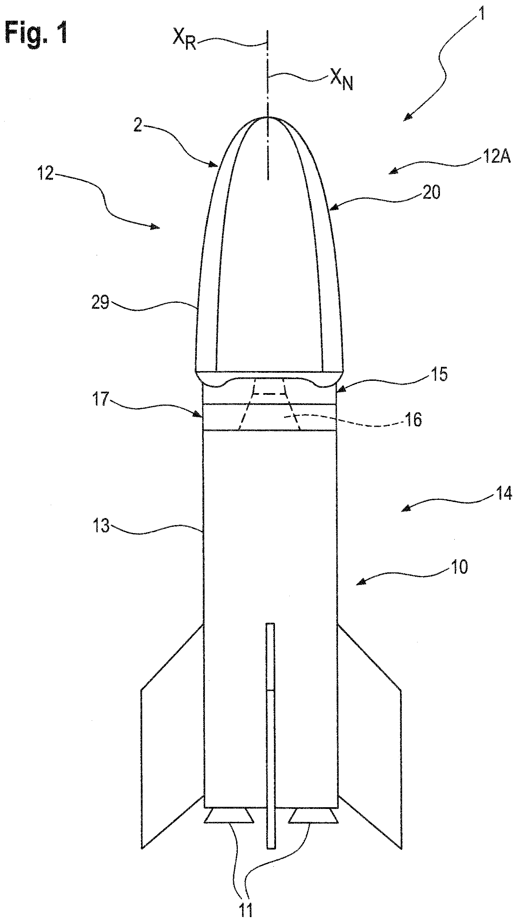

Fig. 1 zeigt in vereinfachter schematischer Darstellung eine Weltraumrakete 1 mit einer Triebwerke 11 aufweisenden unteren Antriebsstufe 10 sowie mit einer Oberstufe 12. Ein zylindrischer Korpus 13 der unteren Antriebsstufe 10 bildet einen Raketenrumpf 14 mit einer Tanksektion zur Aufnahme von Raketentreibstoff. Die Oberstufe 12 wird dabei aus einem wiederverwendbaren Nutzlastmodul 2 und einer eigenständigen Oberstufen-Antriebssektion 15 mit einem Oberstufenantrieb 16 gebildet. Das wiederverwendbare Nutzlastmodul 2 ist vorderen Bereich 12A der Oberstufe 12 vorgesehen.

Die Oberstufe 12 und die untere Antriebsstufe 10 sind über einen Adapter 17 miteinander verbunden. Für den Wiedereintritt des Nutzlastmoduls 2 wird die Oberstufe an dieser Stelle vom Raketenrumpf getrennt. Das Nutzlastmodul 2 ist aus einem Rumpf 29 gebildet, dessen äußere Hülle 20 auch die Außenhaut des Nutzlastmoduls 2 ist. Das Nutzlastmodul 2 ist somit nicht - wie ansonsten im Stand der Technik - von einer Umhüllung umgeben, die von einer zusätzlichen Außenhaut, der Nutzlastverkleidung, ausgehend von der Antriebssektion 10 gebildet ist. Im Inneren des Nutzlastmoduls 2 ist ein Nutzlast-Aufnahmeraum 21 vorgesehen. Dazu ist innerhalb der die äußeren Hülle 20 eine innere Hülle 22 des Nutzlastmoduls 2 angeordnet, die ihrerseits den Nutzlast-Aufnahmeraum 21 umgibt.

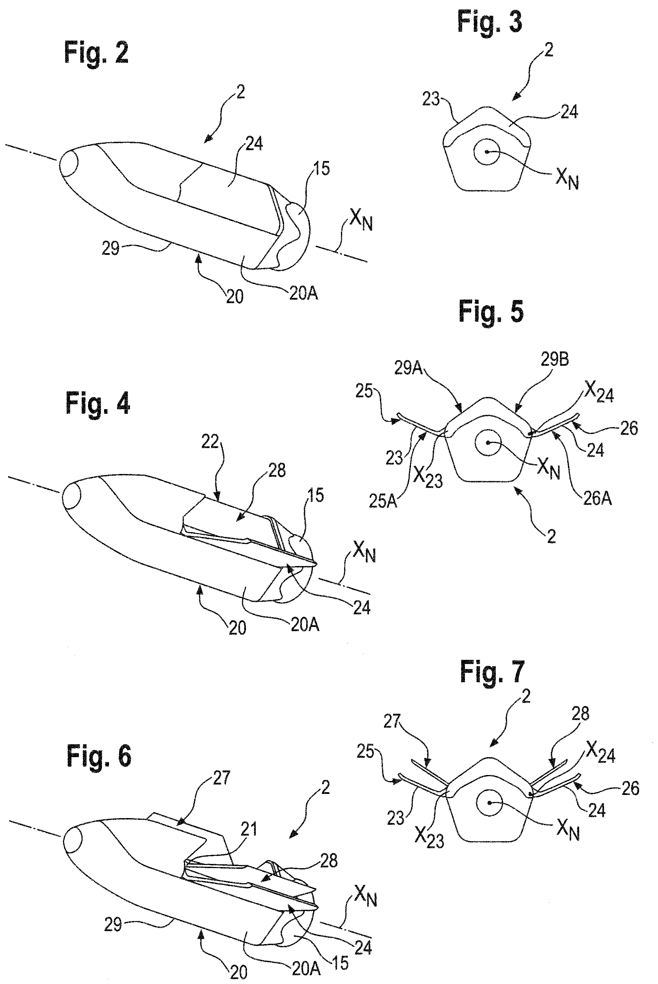

Das Nutzlastmodul 2 weist einen pentagonalen Querschnitt in einer Ebene rechtwinklig zur Nutzlastmodul-Längsachse X_{N} auf, wobei die Nutzlastmodul-Längsachse X_{N} im gezeigten Beispiel mit der Längsachse X_{R} der Weltraumrakete koaxial verläuft. Das Nutzlastmodul 2 ist somit um die Nutzlastmodul-Längsachse X_{N} drehsymmetrisch gestaltet, wie es beispielsweise in Fig. 3 gezeigt ist.

Die Figuren 2 bis 7 zeigen das Nutzlastmodul 2 von pentagonalem Querschnitt in unterschiedlichen Ansichten und Betriebszuständen. In Fig. 2 ist das Nutzlastmodul 2 in einer perspektivischen Ansicht schräg von vorne ohne die Antriebsstufe der Weltraumrakete 1 dargestellt, wie es beispielsweise abgekoppelt von der Trägerrakete im Weltraum schwebt. Die Antriebssektion 15 der Oberstufe 12 ist aus Gründen der Vereinfachung nur schematisch gezeigt. Fig. 3 zeigt das Nutzlastmodul 2 in diesem Zustand von vorne.

Die eine äußere Hülle 20 bildende Verkleidung 20A des Nutzlastmoduls 2 weist zwei Flächenabschnitte 23, 24 auf, die um jeweils eine parallel zur Nutzlastmodul-Längsachse X_{N} ausgerichtete Schwenkachse X₂₃, X₂₄ in entgegengesetzter Schwenkrichtung nach außen schwenkbar sind, wie es in Fig. 4 und Fig. 5 gezeigt ist. In dieser nach außen geschwenkten Position stehen die beiden Flächenabschnitte 23, 24 an zueinander entgegengesetzten Längsseiten des Nutzlastmoduls 2 seitlich schräg nach außen hervor und bilden Flügel 25, 26 des Nutzlastmoduls 2 aus. Der jeweilige Flügel 25, 26 nimmt im ausgeschwenkten Zustand mit dem benachbarten Abschnitt 29A, 29B des Rumpfs 29 eine V-förmige Stellung ein. Die spitze Kante des V verläuft dabei parallel zur Nutzlastmodul-Längsachse X_{N} oder weist zumindest eine dominante Richtungskomponente auf, die parallel zur Nutzlastmodul-Längsachse X_{N} ausgerichtet ist. Die von den Flächenabschnitten 23, 24 gebildeten Flügel 25, 26 können aber auch eine andere Querschnittskontur aufweisen, insbesondere wenn der polygonale Querschnitt des Nutzlastmoduls ein anderer als das gezeigte Fünfeck ist.

Die Flügel 25, 26, die auf ihrer Unterseite 25A, 26A jeweils mit einer hochtemperaturfesten Oberfläche, beispielsweise mit Hitzeschutzkacheln, versehen sind, dienen beim Wiedereintritt des Nutzlastmoduls in eine Atmosphäre, beispielsweise in die Erdatmosphäre, dem Abbremsen und der Stabilisierung der Fluglage des Nutzlastmoduls 2. Im späteren Rückkehrflug zur Erdoberfläche (oder zur Oberfläche eines anderen Planeten) innerhalb der Atmosphäre dienen die Flügel 25, 26 als aerodynamische Tragflächen. Zusätzlich können weitere Flügelpaare zur Steuerung und Stabilisierung vorgesehen sein.

Fig. 6 und Fig. 7 zeigen das Nutzlastmodul 2 in einem Zustand, in dem es beispielsweise im Weltraum schwebt und vorbereitet ist, um eine (nicht gezeigte) Nutzlast abzusetzen oder aufzunehmen. Dazu befinden sich die Flügel 25, 26 in ihrer nach außen geschwenkten Position und zwei der inneren Hülle 22 zugeordnete Klappen 27, 28, die gegenläufig zueinander nach außen ausschwenkbar sind, geben in diesem geöffneten Zustand einen Zugang zum Nutzlast-Aufnahmeraum 21 frei, wie es in Fig. 6 zu sehen ist. Die nach außen schwenkbaren Klappen 27, 28 der inneren Hülle 22 sind dazu in Bezug auf das Nutzlastmodul 2 innerhalb der nach außen schwenkbaren Flächenabschnitte 23, 24 der äußeren Hülle 20 angeordnet, so dass der Nutzlast-Aufnahmeraum 21 durch die geöffneten Flächenabschnitte 23, 24 der äußeren Hülle 20 und die geöffneten Klappen 27, 28 der inneren Hülle 22 von außen zugänglich ist. Beim Wiedereintritt des Nutzlastmoduls 2 in die Atmosphäre und beim Rückkehrflug zur Erdoberfläche (oder zur Oberfläche eines anderen Planeten) sind die Klappen 27, 28 der inneren Hülle 22 geschlossen, wie es in Fig. 4 und Fig. 5 gezeigt ist.

Das in den Figuren gezeigte Nutzlastmodul 2 weist einen polygonalen Querschnitt in einer Ebene rechtwinklig zur Nutzlastmodul-Längsachse X_{N} auf, der um die Nutzlastmodul-Längsachse X_{N} drehssymmetrisch gestaltet ist. Dieser Querschnitt reduziert aufgrund seiner Drehsymmetrie das Auftreten von Seitenkräften beim Start der Weltraumrakete 1 innerhalb der Atmosphäre.

Die Erfindung ist nicht auf die obigen Ausführungsbeispiele beschränkt, die lediglich der allgemeinen Erläuterung des Kerngedankens der Erfindung dienen. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Weltraumrakete
- 2: Nutzlastmodul
- 10: untere Antriebsstufe
- 11: Triebwerk(e)
- 12: Oberstufe
- 12A: vorderer Bereich von 12
- 13: zylindrischer Korpus (mit Tanksektion)
- 14: Raketenrumpf
- 15: Antriebssektion
- 16: Oberstufenantrieb
- 17: Raketenrumpf-Nutzlastmodul-Adapter
- 20: äußere Hülle
- 20A: Verkleidung des Nutzlastmoduls
- 21: Nutzlast-Aufnahmeraum
- 22: innere Hülle
- 23: Flächenabschnitt
- 24: Flächenabschnitt
- 25: Flügel
- 25A: Flügelunterseite
- 26: Flügel
- 26A: Flügelunterseite
- 27: Klappe
- 28: Klappe
- 29: Rumpf des Nutzlastmoduls
- 29A: Abschnitt von 29
- 29B: Abschnitt von 29

- X_{N}: Nutzlastmodul-Längsachse
- X_{R}: Längsachse
- X₂₃: Schwenkachse
- X₂₄: Schwenkachse

## Patentansprüche

1. Wiederverwendbares Nutzlastmodul (2) als Teil einer Oberstufe (12) einer Weltraumrakete (1) mit einer im geschlossenen Zustand des Nutzlastmoduls (2) einen Nutzlast-Aufnahmeraum (21) umgebenden und eine äußere Hülle (20) eines Rumpfs (29) des Nutzlastmoduls (2) bildenden Verkleidung (20A), die drehsymmetrisch zu einer Nutzlastmodul-Längsachse (X_{N}) ausgebildet ist, welche koaxial mit oder parallel zu einer Längsachse (X_{R}) der Weltraumrakete (1) verläuft,
**dadurch gekennzeichnet,**
**dass** die die äußere Hülle (20) bildende Verkleidung (20A) zumindest zwei Flächenabschnitte (23, 24) aufweist, die um jeweils eine Schwenkachse (X₂₃, X₂₄) nach außen schwenkbar sind.

2. Nutzlastmodul nach Anspruch 1,
**dadurch gekennzeichnet,**
wobei die jeweilige Schwenkachse (X₂₃, X₂₄) oder ein dominanter Richtungsvektor der jeweiligen Schwenkachse (X₂₃, X₂₄) parallel zur Nutzlastmodul-Längsachse (X_{N}) ausgerichtet ist.

3. Nutzlastmodul nach Anspruch 1 oder 2,
**dadurch gekennzeichnet,**
**dass** die nach außen verschwenkbaren Flächenabschnitte (23, 24) und bevorzugt auch deren Schwenkachsen (X₂₃, X₂₄) zueinander spiegelsymmetrisch angeordnet sind.

4. Nutzlastmodul nach einem der vorhergehenden Ansprüche,
**dadurch gekennzeichnet,**
**dass** die nach außen schwenkbaren Flächenabschnitte (23, 24) in einem nicht ausgeschwenkten Zustand Teile der Verkleidung (20A) sind oder an dieser anliegen und vorzugsweise die drehsymmetrische Außenkontur der Verkleidung (20A) mitbestimmen und
**dass** sich die nach außen schwenkbaren Flächenabschnitte (23, 24) in einem ausgeschwenkten Zustand seitlich vom Rumpf (29) des Nutzlastmoduls (2) weg erstrecken und jeweils einen Flügel (25, 26) und/oder eine Steuerfläche des Nutzlastmoduls (2) bilden.

5. Nutzlastmodul nach Anspruch 4,
**dadurch gekennzeichnet,**
**dass** der jeweilige Flügel (25, 26) im ausgeschwenkten Zustand mit dem benachbarten Abschnitt (29A, 29B) des Rumpfs (29) eine V-förmige, vorzugsweise spiegelsymmetrische, Stellung einnimmt, wobei die spitze Kante des V parallel zur Nutzlastmodul-Längsachse (X_{N}) verläuft oder zumindest eine dominante Richtungskomponente aufweist, die parallel zur Nutzlastmodul-Längsachse (X_{N}) ausgerichtet ist.

6. Nutzlastmodul nach einem der vorhergehenden Ansprüche,
**dadurch gekennzeichnet,**
**dass** das jeweilige Flügelpaar (25, 26) zumindest bereichsweise als aerodynamische Tragflächen oder als aerodynamische Steuerflächen mit Auftriebseigenschaften ausgebildet ist.

7. Nutzlastmodul nach einem der vorhergehenden Ansprüche,
**dadurch gekennzeichnet,**
**dass** die äußere Hülle (20) eine innere Hülle (22) des Nutzlastmoduls (2) umgibt und, dass innerhalb der nach außen schwenkbaren Flächenabschnitte (23, 24) der äußeren Hülle (20) nach außen schwenkbare Klappen (27, 28) der inneren Hülle (22) vorgesehen sind, die im geöffneten Zustand einen Zugang zum Nutzlast-Aufnahmeraum (21) freigeben.

8. Nutzlastmodul nach einem der vorhergehenden Ansprüche,
**dadurch gekennzeichnet,**
**dass** die die äußere Hülle (20) bildende Verkleidung (20A) einen polygonalen, insbesondere fünfeckigen, Querschnitt aufweist.

9. Oberstufe einer Weltraumrakete (1),
**dadurch gekennzeichnet,**
**dass** die Oberstufe (12) ein wiederverwendbares Nutzlastmodul (2) gemäß einem der vorhergehenden Ansprüche aufweist.

10. Weltraum rakete (1) mit einer unteren Antriebsstufe (10),
**dadurch gekennzeichnet,**
**dass** in einem von der Antriebsstufe (10) abgewandten vorderen Bereich (12A) einer Oberstufe (12) der Weltraumrakete (1) ein wiederverwendbares Nutzlastmodul (2) gemäß einem der vorhergehenden Ansprüche als Teil einer Raketenoberstufe (12) vorgesehenen ist, wobei das Nutzlastmodul (2) vorzugsweise einen vorderen Teil der Oberstufe (12) bildet.
